# NEUE EUROPÄISCHE PATENTSCHRIFT

(11) **EP 3 163 387 B2**
(45) Veröffentlichungstag und Bekanntmachung des Hinweises auf die Entscheidung über den Einspruch: **15.02.2023**
(45) Hinweis auf die Patenterteilung: 19.02.2020
(21) Anmeldenummer: 15192335.6
(22) Anmeldetag: 30.10.2015
(51) Int. Cl.: G05B 19/042, G06F 9/445

(54) **VERFAHREN ZUR ERWEITERUNG DER GERÄTEBESCHREIBUNGSDATEI VON FELDGERÄTEN UND FELDGERÄT MIT ERWEITERBARER GERÄTEBESCHREIBUNGSDATEI**
METHOD FOR EXTENDING THE DEVICE DESCRIPTION FILE OF FIELD DEVICES, AND A FIELD DEVICE WITH EXPANDABLE DEVICE DESCRIPTION FILE
PROCEDE D'EXTENSION DE FICHIER DE DESCRIPTION D'APPAREILS DE TERRAIN ET APPAREIL DE TERRAIN COMPRENANT UN FICHIER DE DESCRIPTION D'APPAREILS EXTENSIBLE

(43) Veröffentlichungstag der Anmeldung: 03.05.2017
(73) Patentinhaber: Bürkert Werke GmbH & Co. KG, 74653 Ingelfingen (DE)
(72) Erfinder: Schmötzer, Ralf, 74677 Hohebach (DE)
(74) Vertreter: Prinz & Partner mbB

(56) Entgegenhaltungen:
- DE-A1- 10 357 276
- DE-A1-102007 062 398
- DE-A1-102008 010 484
- DE-A1-102013 108 478
- US-A1- 2011 125 295
- US-A1- 2012 143 586
- JOCHEN MULLER ET AL: "Optimisation of Field Device Life-Cycle in Process Automation by a flexible Component-based Function Management", INDUSTRIAL INFORMATICS, 2006 IEEE INTERNATIONAL CONFERENCE ON, IEEE, PI, 1. August 2006 (2006-08-01), Seiten 120-125, XP031003337, ISBN: 978-0-7803-9700-2
- IAN VERHAPPEN et al.: "chaper 1", Foundation Fieldbus, no. 4 7 January 2012 (2012-01-07), Retrieved from the Internet: URL:https://www.isa.org/products/foundatio n-fieldbus-fourth-edition
- MARTIN AUGUSTIN et al.: "Electronic Device Description Language - Basis für eine einheitliche und plattformunabhängige Ge- rätebedienung", Inbetrieb- nahme und Engineering von Feldgeräten in dezentralen Automatisierungssyste- men, 2000, München ISBN: 9783486270204 Retrieved from the Internet: URL:https://webservices.siemens.com/wl/efi - les/analvtics/techn_ publications/Description.pdf.
- "CANopen Electronic data sheet specification for CANo- pen, Version 1.3.1.", CiA Draft Standard 306, 1 January 2005 (2005-01-01),
- CiA 306 Draft Standard 306 proposal; Version 1.3.7; 18 März 2014

## Beschreibung

### GEBIET DER ERFINDUNG

Die vorliegende Erfindung betrifft Feldbussysteme, Feldgeräte und Verfahren für Feldbussysteme und Feldgeräte.

### HINTERGRUND

Funktionen und Eigenschaften bspw. von CANopen-Geräten (Feldgeräten) werden weitgehend über Objekte beschrieben und in einem Objektverzeichnis verwaltet. Das Objektverzeichnis wird in elektronischer Form in sogenannten EDS-Dateien (Electronic Data Sheet) abgebildet. EDS-Dateien sind fester Bestandteil der Standardisierung im CANopen-Umfeld (CiA DS306 und CiA DS311) und haben eine grundlegende Bedeutung, wenn es um die Konfiguration in CANopen-Netzwerken geht. Das vom CiA spezifizierte Dateiformat stellt sicher, dass die Gerätebeschreibungen von Werkzeugen (zum Beispiel ProCANopen) unterschiedlicher Softwarehersteller gelesen und verarbeitet werden können. Eine EDS-Datei (elektronisches Datenblatt) ist somit ein Beispiel für eine Gerätebeschreibungsdatei, die auf einem Feldgerät als Firmware fest gespeichert ist und alle Informationen über die gerätespezifischen Parameter sowie Betriebsarten des Gerätes enthält. Durch die Gerätebeschreibungsdatei wird das Gerät ordnungsgemäß konfiguriert bzw. in Betrieb genommen.

Grundsätzlich können Feldgeräte mit fester Konfiguration und Feldgeräte mit einstellbarer Konfiguration unterschieden werden. Bei einem Feldgerät mit fester Konfiguration ist klar definiert, welche Prozessdaten (beispielsweise digitale Eingänge oder aktuelle Drehzahl) wann mit welcher Feldbus- (bspw. CAN)-Botschaft übertragen werden. Diese Einstellungen können nachträglich nicht mehr verändert werden. Oftmals sind Geräte mit fester Konfiguration in der Anschaffung günstiger als baugleiche Geräte, die eine Konfiguration des Gerätes im laufenden Betrieb ermöglichen. Der Grund hierfür ist in den wesentlich einfacheren Softwarestrukturen und der daraus resultierenden transparenten Geräteimplementierung zu suchen. Feldgeräten mit einstellbarer Konfiguration müssen vor der Inbetriebnahme konfiguriert werden. Unter Verwendung eines geeigneten Konfigurationswerkzeuges (beispielsweise ProCANopen) werden alle Geräteparameter definiert. Anschließend wird die so entstandene Konfiguration im Gerät gespeichert. Auch bei einem Feldgerät mit einstellbarer Konfiguration wird die mit dem Konfigurationswerkzeug erstellte Netzwerkkonfiguration in dem Feldgerät gespeichert, sofern die Geräte das "nicht-flüchtige" Speichern (Konfigurationsdaten gehen bei einem Neustart nicht verloren) der Konfigurationsdaten unterstützen. Alternativ hierzu kann die Gerätekonfiguration in einem Konfigurationsmanager abgelegt werden, der beim Systemstart oder der Installation neuer Feldgeräte die Konfiguration der konfigurierbaren Geräte durchführt. Ein solches Verfahren ist beispielsweise aus der DE 10 2008 010 484 A1 bekannt. Der Konfigurationsmanager muss dabei schon im Rahmen der Netzwerkkonfiguration definiert werden. Dieser Ansatz ermöglicht den einfachen Austausch eines defekten Gerätes durch ein neues, baugleiches Gerät (einfache Wartung des Systems).

Nachteilig an den bekannten Gerätebeschreibungsdateien ist, dass Feldgeräte nur in einem bekannten System eingesetzt werden können. Der Einsatz in einem neuen oder geänderten System erfordert eine Anpassung der Gerätebeschreibungsdatei und somit einen Austausch der Firmware des Feldgerätes.

Um eine größere Flexibilität zur Laufzeit zu ermöglichen, ist es bekannt, sogenannte "Dummy Objekte" zu verwenden. Diese belegen jedoch fortwährend Ressourcen, die nicht benötigt werden. Außerdem ermöglichen Dummy Objekte nur eine begrenzte Flexibilität und sind für den Anwender unübersichtlich.

### ZUSAMMENFASSUNG DER ERFINDUNG

Es ist daher eine Aufgabe der vorliegenden Erfindung ein Verfahren zur Erweiterung einer Gerätebeschreibungsdatei eines Feldgerätes und ein korrespondierendes System bereitzustellen. Die Aufgabe wird durch die Gegenstände der unabhängigen Ansprüche gelöst.

Gemäß dem Standard kann ein konkretes Objekt durch folgende Angaben definiert werden: einen Parameternamen (ParameterNamen; notwendig); einen Objektypen (ObjectType (VAR); optional); einen Datentypen (DataType; notwendig); einen Zugangstypen (AccessType; notwendig); einen Default-Wert (DefaultValue; optional), das PDOMapping (optional), die SubNumber (optional), einen unteren Grenzwert (LowLimit; optional); einen oberen Grenzwert (HighLimit; optional); ein Flag (ObjFlags; optional) und den Wert CompactSubObj (optional). Hieraus ergibt sich, dass die Minimalangabe für ein konkretes Objekt nach dem Standard in der Angabe eines Parameternamens, eines Datentyps und eines Zugangstyps besteht.

Die Erfindung stellt ebenfalls ein System bereit, welches umfasst: ein Feldbussystem mit mindestens einem Feldgerät, wobei das System ausgestaltet ist, um eine Gerätebeschreibungsdatei auf das Feldgerät zu laden, das Feldgerät mit der Gerätebeschreibungsdatei in dem Feldbussystem in Betrieb zu nehmen, während des Betriebs des Feldgerätes eine Erweiterungsdatei auf das Feldgerät zu laden, wobei die Erweiterungsdatei nur konkrete Objekte enthält.

Die Gerätebeschreibungsdatei und die Erweiterungsdatei verwenden vorteilhaft die gleiche Syntax. Vorteilhaft ist die Gerätebeschreibungsdatei eine EDS (Electronic Data Sheet)-Gerätebeschreibungsdatei für den CANopen-Standard, die Erweiterungsdatei eine EDS-Erweiterung für den CANopen-Standard und das Feldgerät ist für ein Feldbussystem nach dem CANopen-Standard konfiguriert.

Der Standard ist ein CANopen Standard, wie er eingangs beschreiben wurde und bspw. im CiA 306 Draft Standard Proposal, Version: 1.3.7 vom 18 March 2014 beschrieben ist. Weitere Normen die für den Standard zur Anwendung kommen sind:
- /*CiA301*/ *CiA 301, CANopen application layer and communication profile*
- /*CiA302*/ *CiA 302-4, CANopen Additional application layer functions* -
- *Part 4: Network variables and process image*
- /*CiA305*/ *CiA 305, CANopen layer setting services (LSS) and protocols*
- /*CiA401*/ *CiA 401, CANopen device profile generic I*/*O modules*
- /*ISO646*/ *ISO*/*IEC 646, ISO 7-bit coded character set for information interchange*

Im Falle des CANopen-Standards wird also zunächst die EDS-Gerätebeschreibungsdatei auf das Feldgerät geladen. Das Feldgerät kann mittels der EDS-Gerätebeschreibungsdatei in Betrieb genommen werden. In einem weiteren Schritt, wird eine EDS-Erweiterungsdatei auf das Feldgerät geladen. Dies geschieht während des Betriebs des Feldgerätes. Die EDS-Gerätebeschreibungsdatei und die EDS-Erweiterungsdatei verwenden die gleiche Syntax. Die EDS-Gerätebeschreibungserweiterungsdatei umfasst dabei konkrete Objekte, um welche die Liste der Objekte der EDS-Gerätebeschreibungsdatei erweitert wird.

Die EDS-Gerätebeschreibungserweiterungsdatei, also die Liste der zusätzlichen Objekte wird dann vorteilhaft geparst. Nach einem Neustart kann die EDS-Gerätebeschreibungsdatei und EDS-Gerätebeschreibungserweiterungsdatei verwendet werden, wodurch die zusätzlichen konkreten Objekte verfügbar gemacht werden.

Dabei wird darauf verzichtet vollständige Zusatzfunktionen für Feldgeräte zu realisieren. Gemäß der Erfindung wird ausgenutzt, dass eine EDS-Datei ein Gerät mit Hilfe konkreter kommunizierender Objekte beschreibt. Mit der EDS-Erweiterung (EDS-Gerätebeschreibungserweiterungsdatei) wird das Objektverzeichnis von einem Gerät zur Laufzeit um konkrete Objekte dynamisch erweitert. Die EDS-Erweiterung umfasst somit vorteilhaft ausschließlich konkrete Objekte (Variablen). Diese konkreten Objekte können dann von Funktionen des Gerätes verwendet werden. Die Ausführung der Funktionen bzw. die Funktionszuordnung findet im Gerät selbst statt. So kann beispielsweise ein Gerät einen Sensor aufweisen, der mehrere Werte messen und auswerten kann. Die EDS-Gerätebeschreibungsdatei kann dann so gestaltet sein, dass sie nur einen Prozesswert definiert, so dass ein Kunde dieses Gerät z. B. als Durchflussmesser erwerben und damit nur den Durchfluss messen und verarbeiten kann. Wie das Gerät die Informationen zum Durchfluss verarbeitet, also die Funktion, ist dem Gerät inhärent oder an einer anderen Stelle realisiert. Gemäß der Erfindung kann nun zur Laufzeit ein weiteres konkretes Objekt, z. B. der pH-Wert, mittels der EDS-Erweiterungsdatei diesem Gerät zugeordnet werden, so dass nun mit diesem Gerät der Durchfluss und der pH-Wert gemessen werden kann. Auch die Funktion "pH-Wert verarbeiten" ist erfindungsgemäß im Gerät bereits ab Werk implementiert oder wird an anderer Stelle im Geräteverbund implementiert (bspw. mit einem eigenen Dokument).

Die Erfindung ermöglicht daher, im Unterschied zu bekannten Verfahren, mit konkreten Datentypen und konkreten Objektnamen zu arbeiten. Das Feldgerät stellt die EDS-Datei, die sowohl statische Objekte als auch die durch das Verfahren zur Laufzeit ergänzten dynamischen Objekte enthält, dem System zur Verfügung. Ferner liegt keine Definition einer Maximalausbaustufe vor. Mit anderen Worten stellt sich das Feldgerät gegenüber einer Steuerung nur mit den konkreten Objekten dar.

### KURZE BESCHREIBUNG DER FIGUREN

Weitere Aspekte und Merkmale der Erfindung werden anhand der nachfolgenden Beschreibung von Ausführungsbeispielen unter Bezugnahme auf die beigefügten Figuren deutlich, wobei
FIG. 1 eine vereinfachte Blockdarstellung der Erfindung ist, und
FIG. 2 ein vereinfachtes Flussdiagramm gemäß einem Ausführungsbeispiel ist.

### AUSFÜHRLICHE BESCHREIBUNG DER AUSFÜHRUNGSBEISPIELE

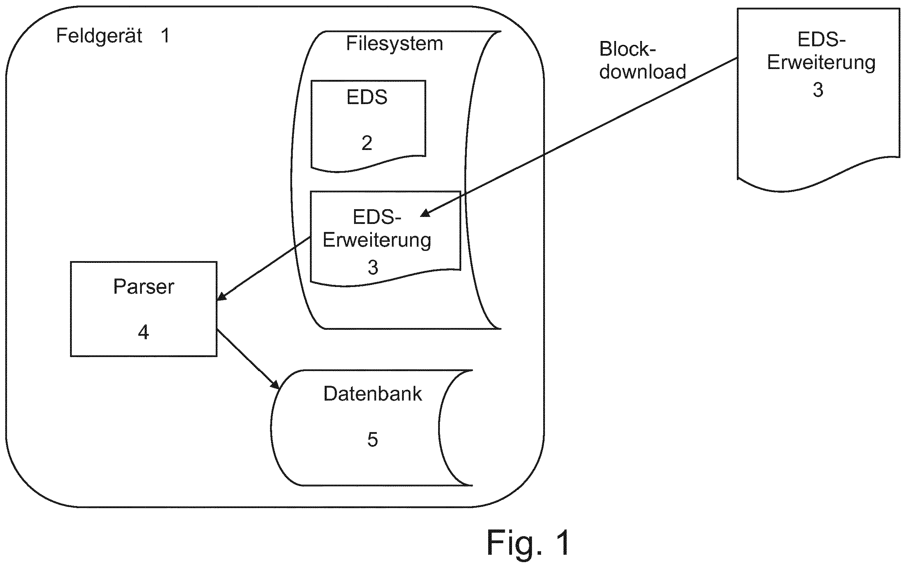

FIG. 1 ist eine vereinfachte Blockdarstellung der Erfindung. Dargestellt ist ein Feldgerät 1. Bei dem Feldgerät 1 handelt es sich um ein Gerät, welches in ein Feldbussystem nach dem CANopen-Standard eingebunden ist und gemäß diesem Standard arbeitet. Das Feldgerät umfasst demnach eine EDS-Gerätebeschreibungsdatei 2, mit der es in Betrieb genommen werden kann. Bei dem Feldgerät 1 kann es sich bspw. um ein Gateway oder einen Regler handeln.

Zur Laufzeit des Feldgerätes 1 kann dann eine EDS-Erweiterung 3 auf das Feldgerät 1 geladen werden. Diese EDS-Erweiterung umfasst ein oder mehrere zusätzliche konkrete Objekte, die bspw. Prozesswerte für den Durchfluss oder den PH-Wert oder andere Parameter etc. bereitstellen. Die EDS-Erweiterung 3 wird zur Laufzeit auf das Feldgerät 1 geladen. Dort wird die EDS-Erweiterung 3 von einem Parser 4 verarbeitet und die Datenbank 5 mit den geparsten Objekten ergänzt.

Nachfolgend gezeigt ist eine sehr vereinfachte Struktur einer EDS-Datei und einer EDS-Erweiterung.

### EDS-Datei (2)

*[2000]*
   *ParameterName=Buerkert Device Description Object*
   *ObjectType=0x9*
   *SubNumber= 10*
*[2000sub0]*
   *ParameterName*=*Number of entries*
   *ObjectType*=*0x7*
   *Data Type=0x0005*
   *AccessType=ro*
   *DefaultValue=9*
   *PDOMapping=0*
   *LowLimit=9*
   *HighLimit=9*
*[2000sub 1]*
   *ParameterName=Device Name*
   *ObjectType*=*0x7*
   *Data Type=0x0009*
   *AccessType=ro*
   *DefaultValue=bueS-X-Gateway*
   *PDOMapping=0*
*[2000sub2]*
   *ParameterName=Ident Number*
   *ObjectType*=*0x7*
   *Data Type=0x0007*
   *AccessType=ro*
   *PDOMapping=0*
*[2002]*
   *ParameterName= User Configuration Object*
   *ObjectType=0x9*
   *SubNumber=4*
*[2002sub0]*
   *ParameterName=Number of entries*
   *ObjectType*=*0x7*
   *Data Type= 0x0005*
   *AccessType=ro*
   *DefaultValue=3*
   *PDOMapping=0*
   *LowLimit= 1*
   *HighLimit=3*
*[2002sub1]*
   *ParameterName= Unique Device Name*
   *ObjectType*=*0x7*
   *Data Type= 0x0009*
   *Access Type=rw*
   *PDOMapping=0*

### EDS-Erweiterung (3)

*[2540]*
   *ParameterName=actual flow 1*
   *ObjectType=0x9*
   *SubNumber=8*
*[2540sub0]*
   *ParameterName=# of entries*
   *ObjectType*=*0x7*
   *Data Type=0x0005*
   *AccessType=ro*
   *DefaultValue=7*
   *PDOMapping=0*
   *LowLimit= 1*
   *HighLimit=9*
*[2540sub1]*
   *ParameterName= Value*
   *ObjectType*=*0x7*
   *DataType=8*
   *Access Type=rww*
   *PDOMapping= 1*
*[2540sub2]*
   *ParameterName= Unit*
   *ObjectType*=*0x7*
   *Data Type =0x0007*
   *AccessType=ro*
   *DefaultValue=0x00A04700*
   *PDOMapping=0*
*[2541]*
   *ParameterName=actual flow 2*
   *ObjectType=0x9*
   *SubNumber=8*
*[2541sub0]*
   *ParameterName=# of entries*
   *ObjectType*=*0x7*
   *Data Type=0x0005*
   *AccessType=ro*
   *DefaultValue=7*
   *PDOMapping=0*
   *LowLimit= 1*
   *HighLimit=9*
*[2541sub1]*
   *ParameterName= Value*
   *ObjectType*=*0x7*
   *DataType=8*
   *AccessType=rww*
   *PDOMapping= 1*

Während die EDS-Datei 2 eine vollständige Gerätebeschreibung umfasst, enthält die EDS-Erweiterung 3 lediglich konkrete zusätzliche Objekte. Diese werden zur Laufzeit ergänzt und stehen dem Feldgerät 1 dann zur Verfügung.

Gemäß dem Standard kann ein konkretes Objekt also durch folgende Angaben definiert werden: einen Parameternamen (ParameterNamen; notwendig); einen Objektypen (ObjectType (VAR); optional); einen Datentypen (DataType; notwendig); einen Zugangstypen (AccessType; notwendig); einen Default-Wert (DefaultValue; optional), das PDOMapping (optional), die SubNumber (optional), einen unteren Grenzwert (LowLimit; optional); einen oberen Grenzwert (HighLimit; optional); ein Flag (ObjFlags; optional) und den Wert CompactSubObj (optional). Hieraus ergibt sich, dass die Minimalangabe für ein konkretes Objekt nach dem Standard in der Angabe eines Parameternamens, eines Datentyps und eines Zugangstyps besteht.

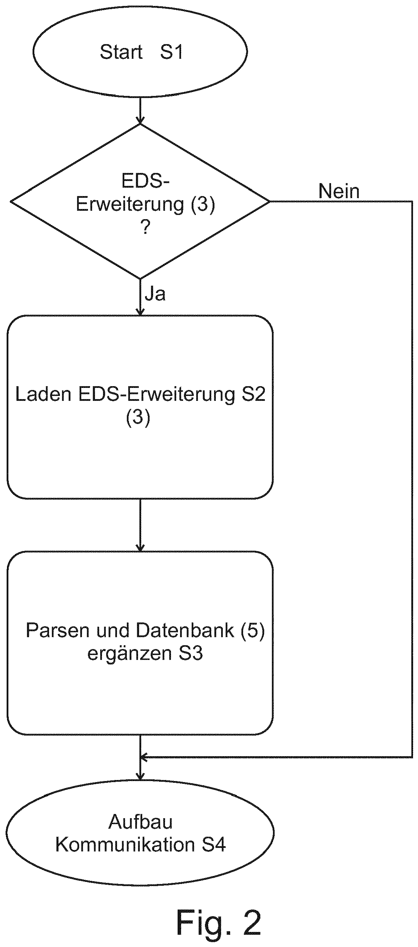

FIG. 2 ist ein vereinfachtes Flussdiagramm gemäß einem Ausführungsbeispiel. In einem ersten Schritt S1 wird das Feldgerät 1 mit der EDS-Gerätebeschreibungsdatei in Betrieb genommen. Zunächst wird überprüft, ob eine EDS-Erweiterung 3 vorhanden ist. Falls eine EDS-Erweiterung 3 vorhanden ist, wird in einem weiteren Schritt S2 zur Laufzeit des Feldgerätes 1 die EDS-Erweiterung 3 geladen. In einem dritten Schritt S3 wird die EDS-Erweiterung 3 geparst und die Datenbank mit den zusätzlichen Objekten ergänzt. Anschließend wird in einem vierten Schritt S4 das Feldgerät mit der EDS-Datei und der EDS-Erweiterung in Betrieb genommen bzw. die Kommunikation aufgebaut. Dies kann auch nach einem Neustart oder eine Neuinitialisierung erfolgen.

Die vorliegende Erfindung stellt somit ein Verfahren und ein System zur Funktionserweiterung eines Feldgerätes 1, wie z. B. eines Gateways oder eines Reglers, bereit. Die Erweiterung erfolgt um Objekte welche im Feldbussystem bzw. Netzwerk verfügbar sind, aber ursprünglich noch nicht bekannt waren. Hierfür ist keine Anpassung der Software des Feldgerätes notwendig. Das Feldgerät kann also zur Laufzeit um Objekte und Prozesswerte erweitert werden, die in einer "Konfigurationsdatei" beschrieben sind. Diese "Konfigurationsdatei" kann eine Erweiterung einer Gerätebeschreibungsdatei sein. Bei CANopen ist die Gerätebeschreibungsdatei eine EDS-Datei und die "Konfigurationsdatei" entspricht einer EDS-Erweiterung 3. Die EDS-Datei 2 ist der statische Teil, der sich bereits auf dem Feldgerät 1 befindet. Die EDS-Erweiterung 3 ist der dynamische Teil, der im laufenden Betrieb auf das Feldgerät 1 geladen werden kann. Sobald sich die EDS-Erweiterung auf dem Feldgerät befindet, sind alle "neuen Objekte" adressierbar und können von extern abgerufen und bearbeitet werden.

Dies ermöglicht das gezielte und effiziente ergänzen von konkreten Objekten auf Feldgeräten 1 zur Laufzeit, ohne die Firmware anpassen zu müssen. Dies ermöglicht den Einsatz der Erfindung in einem zunächst unbekannten System. Das Feldgerät kann das eigene Objektverzeichnis sowie die Gerätebeschreibung an die Umgebung anpassen. Ferner kann das Feldgerät flexibel andere Geräte repräsentieren. Insbesondere kann sich das Feldgerät durch die Erweiterung der Gerätebeschreibungsdatei EDS auch mit den neuen Objekten ausweisen. Das Verfahren ist flexibel und Ressourcen schonend, da das Feldgerät keinen Speicherplatz für mögliche Objekte vorhalten muss. Darüber hinaus kann das Feldgerät nahtlos in das System integriert werden, z. B. in dem die Objekte geeignet benannt und mit geeigneten Datentypen und physikalischen Einheiten beschrieben werden.

## Patentansprüche

1. Verfahren zur Erweiterung einer Gerätebeschreibungsdatei (2) eines Feldgerätes (1), welches umfasst: Laden der Gerätebeschreibungsdatei (2) auf ein Feldgerät (1), das für ein Feldbussystem nach dem CANopen-Standard konfiguriert ist, wobei die Gerätebeschreibungsdatei (2) eine EDS (Electronic Data Sheet)-Gerätebeschreibungsdatei für den CANopen-Standard ist, in Betrieb nehmen des Feldgerätes (1) mit der Gerätebeschreibungsdatei (2) in einem Feldbussystem, **dadurch gekennzeichnet, dass** das Verfahren weiterhin umfasst: Laden einer Erweiterungsdatei (3) auf das Feldgerät (1) während des Betriebs des Feldgerätes, wobei die Erweiterungsdatei (3) eine EDS-Erweiterung für den CANopen-Standard ist, wobei die Erweiterungsdatei (3) nur konkrete Objekte enthält, wobei die konkreten Objekte jeweils zumindest einen definierten Parameternamen, einen definierten Datentypen und einen definierten Zugangstypen aufweisen.

2. Verfahren nach Anspruch 1, wobei die Gerätebeschreibungsdatei (2) und die Erweiterungsdatei (3) die gleiche Syntax verwenden.

3. Verfahren nach einem der vorstehenden Ansprüche, welches umfasst: Parsen der Erweiterungsdatei (3) und Verwenden der konkreten Objekte nach einer Neuinitialisierung oder einem Neustart des Feldgerätes (1).

4. System umfassend: ein Feldbussystem mit mindestens einem Feldgerät (1), wobei das System ausgestaltet ist, um eine Gerätebeschreibungsdatei (2) auf das Feldgerät (1) zu laden, das für ein Feldbussystem nach dem CANopen-Standard konfiguriert ist, wobei die Gerätebeschreibunasdatei (2) eine EDS (Electronic Data Sheet)-Gerätebeschreibunasdatei für den CANopen-Standard ist, das Feldgerät (1) mit der Gerätebeschreibungsdatei (2) in dem Feldbussystem in Betrieb zu nehmen, **dadurch gekennzeichnet, dass** dass das System weiterhin ausgestaltet ist, um während des Betriebs des Feldgerätes (1) eine Erweiterungsdatei (3) auf das Feldgerät zu laden, wobei die Erweiterungsdatei (3) eine EDS-Erweiterung für den CANopen-Standard ist, wobei die Erweiterungsdatei (3) nur konkrete Objekte enthält, und wobei die konkreten Objekte jeweils zumindest einen definierten Parameternamen, einen definierten Datentypen und einen definierten Zugangstypen aufweisen.

## Claims

1. A method for the extension of a device description file (2) of a field device (1), comprising: loading the device description file (2) on a field device (1) which is configured for a fieldbus system in accordance with the CANopen standard, the device description file (2) being an EDS (Electronic Data Sheet) device description file for the CANopen standard, putting the field device (1) with the device description file (2) into operation in a fieldbus system, **characterized in that** the method further comprises: loading an extension file (3) on the field device (1) during operation of the field device, the extension file (3) being an EDS extension for the CANopen standard, the extension file (3) containing only concrete objects, the concrete objects each having at least one specified parameter name, one specified data type, and one specified access type.

2. The method according to claim 1, wherein the device description file (2) and the extension file (3) use the same syntax.

3. The method according to any of the preceding claims, comprising: parsing the extension file (3) and using the concrete objects after a reinitializing or a restart of the field device (1).

4. A system comprising: a fieldbus system having at least one field device (1), the system being configured to load a device description file (2) on the field device (1) which is configured for a fieldbus system in accordance with the CANopen standard, the device description file (2) being an EDS (Electronic Data Sheet) device description file for the CANopen standard, to put the field device (1) with the device description file (2) into operation in the fieldbus system, **characterized in that** the system is further configured to load an extension file (3) on the field device during operation of the field device (1), the extension file (3) being an EDS extension for the CANopen standard, the extension file (3) containing only concrete objects, and the concrete objects each having at least one specified parameter name, one specified data type, and one specified access type.

## Revendications

1. Procédé d'extension d'un fichier de description d'appareil (2) d'un appareil de terrain (1), comprenant: la charge du fichier de description d'appareil (2) sur un appareil de terrain (1) qui est configuré pour un système de bus de terrain selon le standard CANopen, le fichier de description d'appareil (2) étant un fichier de description d'appareil EDS (Electronic Data Sheet) pour le standard CANopen, la mise en service de l'appareil de terrain (1) avec le fichier de description d'appareil (2) dans un système de bus de terrain, **caractérisé en ce que** le procédé comprend en outre : la charge d'un fichier d'extension (3) sur l'appareil de terrain (1) pendant le fonctionnement de l'appareil de terrain, le fichier d'extension (3) étant une extension EDS pour le standard CANopen, le fichier d'extension (3) ne contenant que des objets concrets, les objets concrets comprenant chacun au moins un nom de paramètre défini, un type de données défini et un type d'accès défini.

2. Procédé selon la revendication 1, le fichier de description d'appareil (2) et le fichier d'extension (3) utilisant la même syntaxe.

3. Procédé selon l'une des revendications précédentes, comprenant : l'analyse du fichier d'extension (3) et l'utilisation des objets concrets après une réinitialisation ou un redémarrage de l'appareil de terrain (1).

4. Système comprenant : un système de bus de terrain comprenant au moins un appareil de terrain (1), le système étant réalisé de manière à charger un fichier de description d'appareil (2) sur l'appareil de terrain (1), qui est configuré pour un système de bus de terrain selon le standard CANopen, le fichier de description d'appareil (2) étant un fichier de description d'appareil EDS (Electronic Data Sheet) pour le standard CANopen, à mettre en service l'appareil de terrain (1) avec le fichier de description d'appareil (2) dans le système de bus de terrain, **caractérisé en ce que** le système est en outre réalisé de manière à charger un fichier d'extension (3) sur l'appareil de terrain pendant le fonctionnement de l'appareil de terrain (1), le fichier d'extension (3) étant une extension EDS pour le standard CANopen, le fichier d'extension (3) ne contenant que des objets concrets, et les objets concrets comprenant chacun au moins un nom de paramètre défini, un type de données défini et un type d'accès défini.
